# EUROPEAN PATENT APPLICATION

(11) **EP 4 609 764 A1**
(43) Date of publication of application: **03.09.2025**
(21) Application number: 25157398.6
(22) Date of filing: 12.02.2025
(51) Int. Cl.: A47J 31/54, B23K 33/00, F16J 12/00

(54) **PRESSURE VESSEL AND RELATED PRODUCING METHOD**

(30) Priority: 28.02.2024 IT 202400004327
(71) Applicant: Steelform S.r.l., 33061 Rivignano Teor (UD) (IT)
(72) Inventor: ODORICO, Angelo, Rivignano Teor (UD) (IT)
(74) Representative: Cercenà, Alice

(57) **Abstract**

The present invention relates to a vessel (1, 1') adapted to operate under pressure comprising: a tubular body (2) extending along an axis (X-X) between two opposite ends, formed by a wall having a thickness (DM) defining an inner surface (21); a pair of bottom plates (3) each formed by an essentially flat plate having a thickness (DF) and having an inner face (31), an outer face (32) and a perimeter edge (33); said bottom plates (3, 3') being welded to the end edges of said tubular body (2) along a welding path (G) formed on the contact profile so that said vessel (1, 1') defines an essentially fluid-tight internal chamber (10). In particular, at least one of said bottom plates (3, 3') comprises a reduced thickness portion (4, 4') arranged near the perimeter edge (33) and configured so that, in use, the inner surface (21) of said tubular body (2) is connected to the surface of said inner face (31) of said bottom plate (3, 3') through said reduced thickness portion (4, 4'). The present invention also relates to a method for producing a vessel (1, 1') adapted to operate under pressure.

## Description

### TECHNICAL FIELD OF THE INVENTION

The present invention relates to a pressure vessel adapted to generate steam in particular but not exclusively for preparing beverages, for example a boiler which can be used in an espresso coffee machine, or in a domestic or professional appliance, such as for example boilers for iron, dishwashers, etc..

Furthermore, the present invention relates to a method for producing a pressure vessel.

### BACKGROUND OF THE INVENTION

Generally, a pressure vessel for generating steam is a hollow metal container, essentially formed by a cylindrical tubular body, commonly called "jacket", whose ends are hermetically sealed by corresponding circular plates, which are flat or rounded outwards, commonly called "bottom plates", which allow to obtain an essentially fluid-tight internal chamber.

For use within appliances, such as for example those adapted to prepare beverages, due to the overall dimensions of the bottom plates are preferably formed by flat plates having an even thickness, generally greater than the thickness of the side wall of the jacket given that provided for thereon are holes protruded to ensure the fluid-tight switching to the armoured resistor operating pressure or for the screwing of control probes, thermocouples or other components of the boiler.

Generally, the bottom plates have a diameter essentially corresponding to the diameter on which the outer surface of the jacket lies and they are fixed to the corresponding end of the jacket through the head to head welding carried out at the contact profile between the bottom plate and the jacket, following a welding path from the external of the vessel up to the internal chamber, with or without the addition of delivery material.

Given that they are vessels adapted to operate under pressure, there are strict safety regulations which require that the weldings be of the complete penetration type, which means that the melting of the metal propagates along the entire contact profile between the bottom plate and the jacket, until it terminates into the internal chamber of the boiler.

Besides the above, there is also the fact that, should such vessels be used in appliances for preparing beverages, they must comply with the requirements provided for the international standards on food contact materials which provide for that, at the welding area between the jacket and the bottom plate, the inner surface of the vessel does not have any crack or interstice wherein impurities could deposit.

As a matter of fact, should the weldings be of the fully penetrating type and there are no interstices, the internal of the boiler may be pickled and passivated, given that the pickling acids used can then be effectively washed and removed.

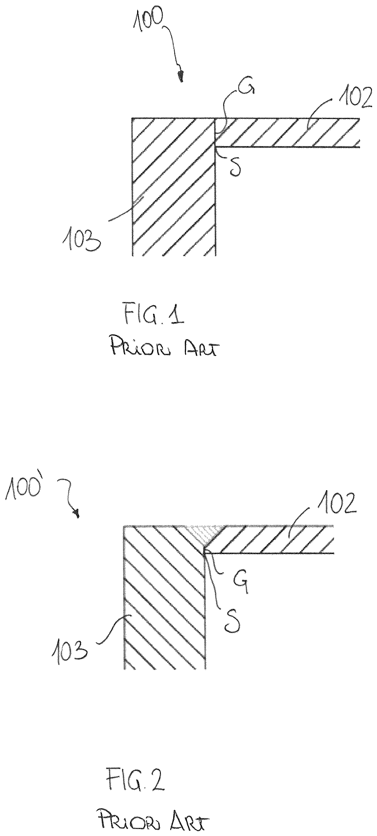

However, as shown in figure 1, which shows with a cross-sectional view the welding area between a tubular body 102 and the bottom plate 103 of a vessel 100 of the prior art, due to the geometry of such components it is rather difficult to obtain a fully penetrated welding given that the outlet point S of the welding area G is arranged flush with the surface of the inner face of the bottom plate 103, and this prevents from verifying the actual propagation of the welding throughout the extension of the contact profile between the tubular body 102 and the bottom plate 103.

To partially resolve this drawback, as shown in figure 2, it is known to provide special chamfering on the outer side of the tubular body 102 and the bottom plate 103 which facilitate the welding process given that they reduce the required path thereof, increasing the possibility that the welding propagates until the full fluid-tight penetration into the chamber. In this case, the welded joining is carried out by delivering material, which therefore fills the seat obtained with the chamfering.

However, in both cases described above, a welded joint thus obtained connects the jacket and the bottom plate rigidly; as a result, given that during subsequent use cycles the internal chamber of the vessel is brought to the operating pressure and de-pressure, the body of the vessel is subjected to repeated stresses and its excessive rigidity can cause the formation of cracks at the welding, from which there could be the out-flow of the pressure fluid contained therein, leading to the loss of sealing inevitably making them inefficient.

Therefore, it would be desirable, and actually the main task of the subject matter of the present invention is to provide a pressure vessel which prevents the formation of cracks, therefore ensuring the sealing of the vessel and contributing to increasing the service life thereof.

Within the scope of the task outlined above, an object of the present invention lies in obtaining a pressure vessel which allows the full penetration of the weldings, so as to allow compliance with the safety and food contact suitability regulations provided for.

A further object of the present invention is to provide a pressure vessel that is easy to produce.

Last but not least, the object of the present invention is to provide a pressure vessel that attains the task and objects mentioned above by using the usual and known installations, machines and appliances.

### BRIEF DESCRIPTION OF THE FIGURES

The aforementioned tasks and objects, as well as others which will be more apparent hereinafter, are attained through a pressure vessel according to claim 1. The subsequent claims define further characteristics of a pressure vessel according to the present invention which will be better illustrated in the description of a particular, but not exclusive embodiment shown by way of non-limiting example in the attached drawings wherein:
- figure 1 shows, with a cross-sectional view, the contact profile between the tubular body and the bottom plate of a pressure vessel 100 according to the prior art, along which there propagates the welding path G, highlighting the outlet point S thereof in the cavity of the vessel;
- figure 2 shows, with a cross-sectional view, the contact profile between the tubular body and the bottom plate of a pressure vessel 100' according to a variant embodiment of the prior art, along which there propagates the welding path G, highlighting the outlet point S thereof in the cavity of the vessel;
- figure 3A shows, with a cross-sectional view, a vessel according to a first embodiment of the present invention;
- figure 3B is a partial view of the vessel sectioned along the plane A-A of figure 3A;
- figure 3C shows an enlarged detail of figure 3B;
- figure 4 shows, with an isometric view, a bottom plate of a vessel according to figures 3A-3C;
- figure 5A shows, with a lateral view, a vessel according to a second embodiment of the present invention;
- figure 5B is a partial view of the vessel sectioned along the plane A-A of figure 5A;
- figure 5C shows an enlarged detail of figure 5B;
- figure 6 shows, with an isometric view, a bottom plate of the vessels according to figures 5A-5C;
- figures 7A and 7B show, with a cross-sectional view, the bottom plate of figure 6 respectively before the plastic deformation step and subsequently to the plastic deformation step.

### DETAILED DESCRIPTION OF THE INVENTION

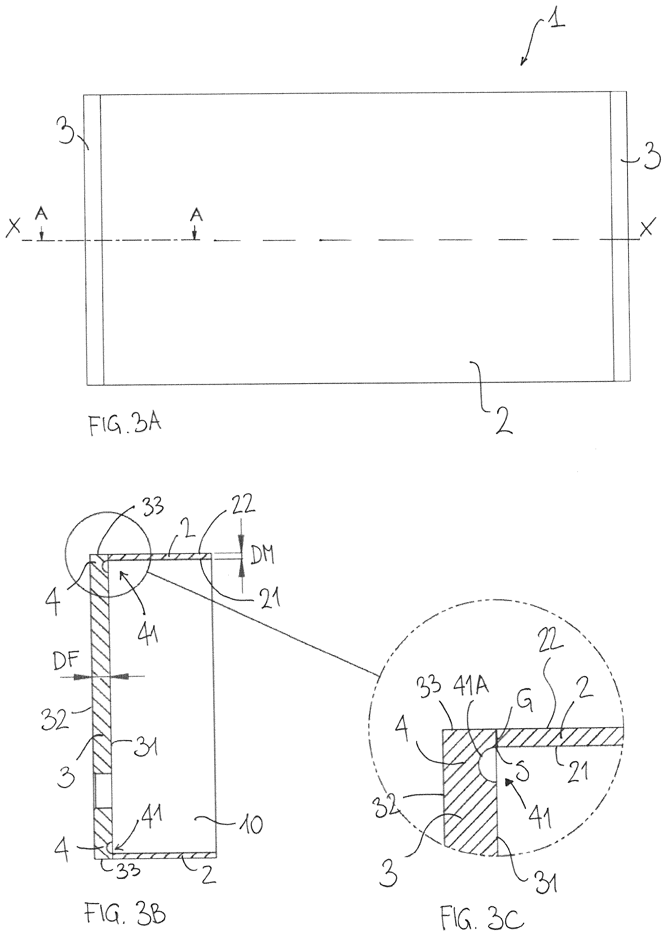

With reference to figures 3A, 3B and 3C there is shown a vessel 1 according to a first embodiment of the present invention of the type adapted to operate under pressure and which can be used for example in an appliance for preparing hot beverages, such as for example an espresso coffee machine.

It is clear that a pressure vessel according to the present invention can be used various purposes and in both domestic and professional appliances, which require the generation of steam, such as for example boilers for iron, dishwashers or other.

Said vessel 1 comprises a tubular body, or jacket, 2 advantageously formed by a preferably cylindrical wall conveniently made of metal material, such as for example steel or other alloys, longitudinally extending along an axis X-X between two opposite ends, sealed in an essentially fluid-tight manner by a pair of bottom plates 3, each formed by an essentially flat plate, also preferably made of metal material such as for example stainless steel, so that said vessel 1 defines a substantially fluid-tight chamber 10 therein.

As observable in figure 3B, the wall of the tubular body 2 has a first essentially uniform thickness DM, for example comprised between 1 and 6 mm, and it has an inner cylindrical surface 21 and an outer cylindrical surface 22, lying on a different diameter.

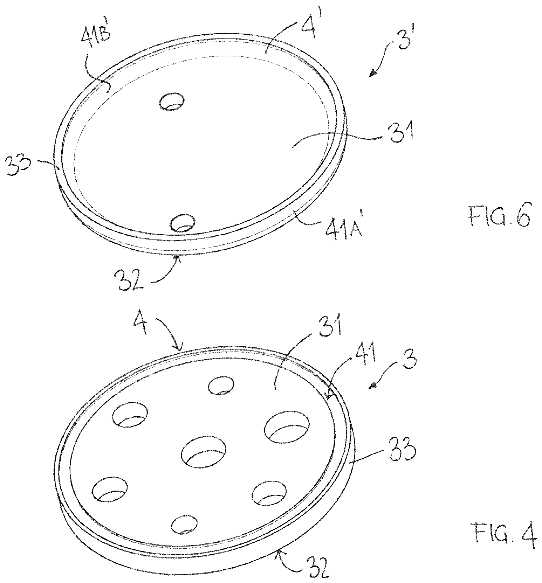

Advantageously, the plates that form the bottom plates 3 are defined by a substantially circular shaped perimeter edge 33, with a diameter essentially equal to the diameter of the outer surface 22 of the tubular body 2, and they have a second thickness DF preferably greater than the thickness DM of the side wall of the tubular body 2, and preferably comprised between 1 and 10 mm, given that there are advantageously provided thereon are threaded holes for fitting elements such as resistors, thermocouples or probes, as better observable in figure 4.

Each of said bottom plates 3 has two opposite faces, and in particular an inner face 31 designed to be arranged facing in use towards the cavity of the tubular body 2 and an outer face 32 designed to be arranged facing in use towards the outside.

To provide the vessel 1, said bottom walls 3 are positioned perpendicularly to the axis X-X and abutting against the end edges of the tubular body 2, so that the perimeter edge 33 is essentially flush with the outer surface 22 of the tubular body 2, and they are fixed thereon, in particular through a welding process, which propagates from the external of the vessel 1 towards the internal chamber 10 with a welding path G extending along the contact profile between said two components, as shown in figure 3B.

According to an advantageous characteristic of the present invention, at least one of said bottom plates 3, and preferably both, comprises a reduced thickness portion 4 arranged near the perimeter edge 33 and configured so that, in use, the inner surface 21 of the tubular body 2 is connected to the surface of the inner face 31 of the bottom plate 3 through said reduced thickness portion 4.

Advantageously, said reduced thickness portion 4 comprises a groove 41 which extends circumferentially continuously and receding with respect to the surface of the inner face 31 of the bottom plate 3.

Preferably, said groove 41 defines a recessed surface 41A with respect to the inner face 31 of the remaining portion with nominal thickness of the bottom plate 3, and it has a section comprising at least one section having a curved development, preferably arranged near the perimeter edge 33 of the bottom plate 3. Preferably, said groove 41 defines a surface 41A having a constant curvature, having a semicircular section.

Preferably, said groove 41 extends in the thickness of the bottom plate 3 for a depth such that the remaining part has a thickness that is greater than or equal to the thickness DM of the tubular body 2.

Preferably, said groove 41 is arranged at a distance from the perimeter edge 33 of the bottom plate 3 essentially equal to the value of the thickness DM of the tubular body 2, so that, when the bottom plate 3 is positioned abutting against the end edges of the latter, said groove 41 is positioned at the outlet point S of the welding path G arranged in the chamber 10.

Therefore, in use, the surface 41A of the groove 41 of the reduced thickness portion 4 of the bottom plate 3, advantageously having a section having at least one portion with curved development, connects the inner surface 21 of the tubular body 2 to the surface of the inner face 31 of the remaining portion with nominal thickness of the bottom plate 3, therefore making the welded joining between the tubular body 2 and the bottom plate 3 less rigid.

Furthermore, advantageously, the outlet point S of the welding path G in the internal chamber 10 is conveniently located at said reduced thickness portion 4, arranged facing into the groove 41 which creates a sort of gap or concavity which moves it away from the surface of the inner face 31, allowing the welding to propagate effectively along the welding path G and to terminate in the chamber 10, ensuring full penetration thereof.

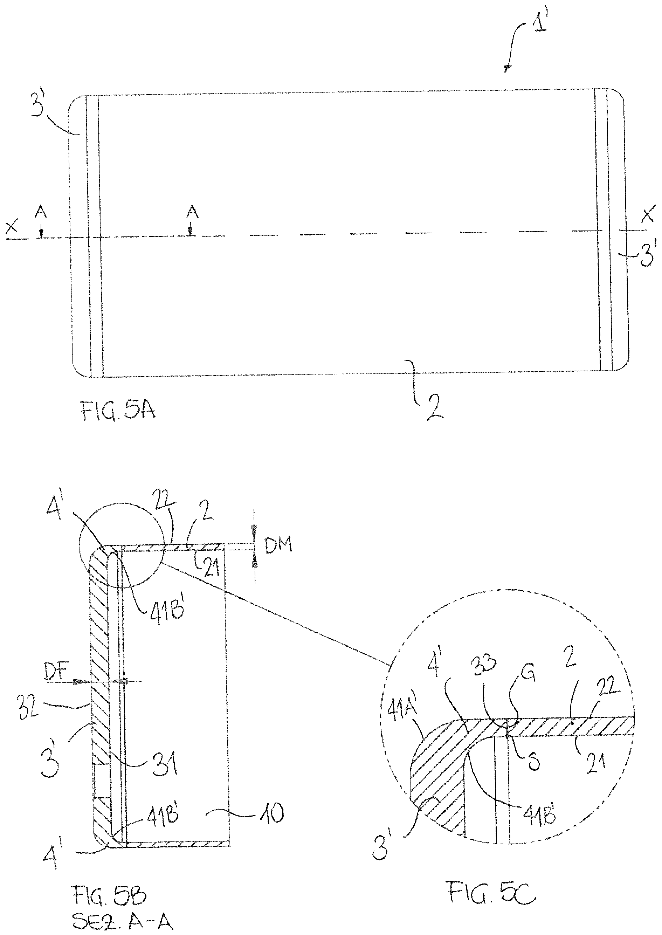

Figures 5A, 5B and 5C show a vessel 1' according to a second embodiment of the present invention.

Like in the case of the first embodiment, the vessel 1' comprises a tubular body 2, essentially similar to the one described in the first embodiment of the invention, and a pair of bottom plates 3' welded to the opposite ends, allowing to create a fluid-tight chamber 10.

Each of said bottom plates 3' preferably has a thickness DF greater than the thickness DM of said tubular body 2, and it comprises a reduced thickness portion 4' arranged near the perimeter edge 33 and configured so that, in use, the inner surface 21 of the tubular body 2 is connected to the surface of the inner face 31 of the remaining portion with nominal thickness of the bottom plate 3' through said reduced thickness portion 4'.

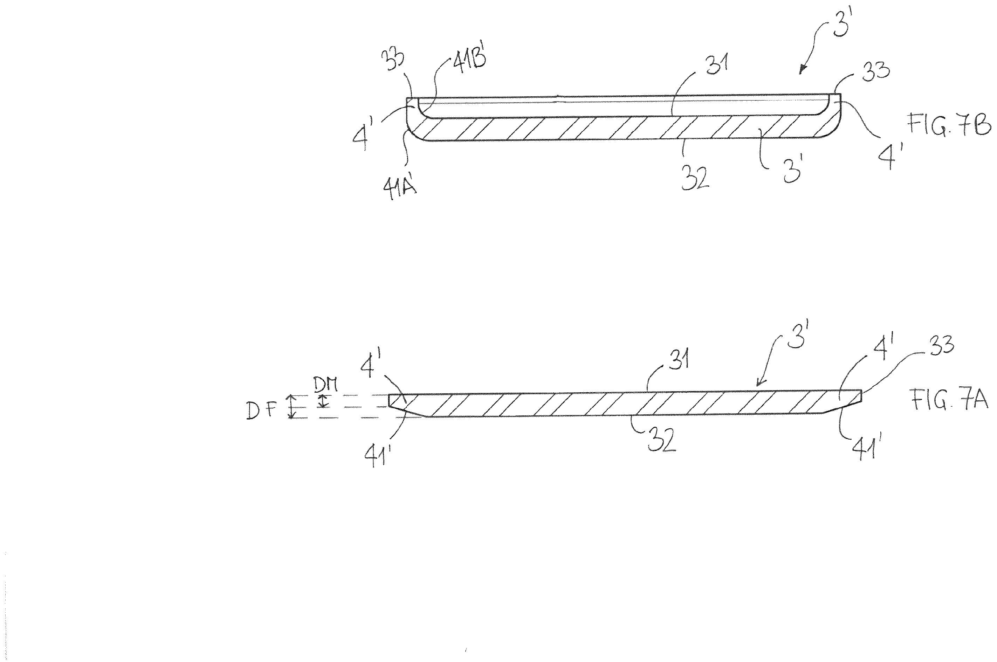

In particular, as shown in figure 7A, said reduced thickness portion 4' is a circular crown having a profile 41' progressively sloping towards the perimeter edge 33 of the bottom plate 3' until it reaches a perimeter circumferential thickness advantageously equal to the thickness DM of the tubular body 2.

Preferably, the reduced thickness portion 4' is obtained by turning, preferably on the outer face 32 of the bottom plate 3'. Alternatively, said reduced thickness portion 4' may have a sloping profile 41' on the inner face 31 of the bottom plate 3'.

To produce said vessel 1', said reduced thickness portion 4' is plastically deformed, preferably by moulding, so that the perimeter edge 33 is arranged essentially orthogonally with respect to the lying plane of the inner face 31 of the bottom plate 3', as shown in figures 6 and 7B.

The reduced thickness portion 4' therefore comprises a surface 41A' arranged on the side of the outer face 32' of the bottom plate 3' and a surface 41B' arranged on the side of the inner face 31 of the bottom plate 3', wherein, following the plastic deformation of the reduced thickness portion 4', at least said inner surface 41B', and advantageously also said outer surface 41A', have a curved development with different radius, as shown in figure 7B.

The bottom plate 3' is therefore arranged with the perimeter edge 33 resting against the end edge of the tubular body 2 to form the contact profile between the two components, along which there propagates the welding path G.

As a result, in use, the inner surface 21 of the tubular body 2 is connected to the surface of the inner face 31 of the bottom plate 3' through an inner surface 41B' of said reduced thickness portion 4' which has a curved development following the plastic deformation process.

Advantageously, as better observable in figure 5C, the outlet point S in the chamber 10 of the welding path G is located at said reduced thickness portion 4', which creates a sort of concavity adapted to move it away from the surface of the inner face 31 of the remaining portion with nominal thickness of the bottom plate 3', allowing the welding to propagate effectively along the welding path G until it reaches the chamber 10, ensuring full penetration thereof.

Furthermore, the present invention relates to a method for producing a vessel 1, 1' adapted to operate under pressure, comprising the following steps:
a) providing a tubular body 2 formed by a cylindrical wall having a first thickness DM and defining an inner surface 21;
b) providing a pair of bottom plates 3, 3' each formed by an essentially flat plate having a second thickness DF and having an inner face 31, an outer face 32 and a perimeter edge 33;
c) positioning said bottom plates 3, 3' at the ends of said tubular body 2;
d) welding each of said bottom plates 3, 3' to the end edges of said tubular body 2 along a welding path G extending along the contact profile between said components, so that said vessel 1, 1' defines an essentially fluid-tight internal chamber 10;
   wherein before step c) the method comprises a step b') which provides for obtaining on at least one of said bottom plates 3, 3', and preferably on both, a reduced thickness portion 4, 4' arranged near the perimeter edge 33 and configured so that, in use, the inner surface 21 of the tubular body 2 is connected to the surface of the inner face 31 of the bottom plate 3, 3' through said reduced thickness portion 4, 4'.

Advantageously, the welding according to step d) is obtained, preferably with a single operation, along a welding path G extending from the external of the vessel towards the internal so that the outlet point S thereof in the chamber 10 is located at said reduced thickness portion 4, 4', which creates a sort of concavity adapted to move away such outlet point S from the surface of the inner face 31 of the remaining portion with nominal thickness of the bottom plate 3, 3', allowing the welding to propagate effectively, ensuring full penetration thereof.

According to a first embodiment of the present invention, said reduced thickness portion 4 comprises a groove 41, preferably obtained by turning, defining a recessed surface 41A with respect to the surface of the inner face 31 of the bottom plate 3 and advantageously having a section having at least one portion with curved development.

According to a second embodiment of the present invention, said reduced thickness portion 4' is formed by a circular crown having a profile 41' sloping towards the perimeter edge 33 of the bottom plate 3' obtained by turning.

In this case, the method provides for a further step b") subsequent to step b'), which provides for plastically deforming the reduced thickness portion 4', preferably by moulding, so that the perimeter edge 33 is arranged essentially orthogonally with respect to the lying plane of the inner face 31 of the bottom plate 3', therefore curving the opposite surfaces 41A', 41B' of the reduced thickness portion 4'.

In conclusion, in the light of the above it is clear that the present invention allows to attain the initially envisaged objects and advantages.

As a matter of fact, herein provided is a pressure vessel provided with flat bottom plates which, due to the formation on at least one of said bottom plates of a reduced thickness portion arranged configured so that, in use, the inner surface of the tubular body of the vessel is connected to the surface of the inner face of the remaining portion with nominal thickness of said bottom plate through said reduced thickness portion, advantageously having a connection surface provided with at least one curved section, the welded joining between the tubular body and the bottom plate is less rigid with respect to the vessel of the prior art.

This allows to prevent, or at least delay, the formation of cracks, ensuring the sealing of the vessel and therefore increasing the service life thereof.

Advantageously, a vessel 1 according to the first embodiment of the invention it is absolutely easy to produce, by solely providing for the formation of a circumferential groove on the inner face 31 of the bottom plate 3.

Although a vessel 1' according to the second embodiment of the present invention requires an additional machining, that is the formation of the circular crown with sloping profile 41 and the subsequent plastic deformation thereof, laboratory tests which have been performed showed an overall and marked increase in the strength of the welded joints, which allows to significantly extend the service life of the vessel.

Furthermore, given that the outlet point S of the welding path G obtained from the external of the vessel towards the internal along the contact profile between the tubular body and the bottom plate and which faces into the cavity obtained by the reduced thickness portion, the full penetration of the weldings is ensured, therefore allowing compliance with the safety and suitability to food contact regulations provided for.

Lastly, it is clear that a pressure vessel according to the present invention is easy to produce given that it requires, before welding with the tubular body, simple and immediate steps for processing the bottom plate, which can be obtained with prior art and conventional appliances, and given that it requires to carry out a single welding operation for each bottom plate, carried out easily and safely from the external toward the internal of the vessel.

It should be observed that in the description of the present invention, the directional terms such as "above, below, vertical, horizontal, lateral, lower and upper", same case applying to any other similar term, shall be interpreted with reference to a vessel in the normal operative configuration thereof, that is in use, as shown in the attached figures.

Obviously, the invention is susceptible of numerous modifications or variants without departing from the scope of protection of the present invention, as defined by any one of the attached claims. Furthermore, the materials used to implement the present invention, as well as the shapes and dimensions of the individual components, may be the most appropriate depending on the specific requirements.

## Claims

1. Vessel (1, 1') adapted to operate under pressure comprising:
- a tubular body (2) extending along an axis (X-X) between two opposite ends, formed by a wall having a thickness (DM) and defining an inner surface (21);
- a pair of bottom plates (3, 3') each formed by an essentially flat plate having a thickness (DF) and having an inner face (31), an outer face (32) and a perimeter edge (33);
said bottom plates (3, 3') being welded to the opposite end edges of said tubular body (2) along a welding path (G) formed on the contact profile so that said vessel (1, 1') defines an essentially fluid-tight internal chamber (10),
**characterised in that**
wherein at least one of said bottom plates (3, 3') comprises a reduced thickness portion (4, 4') arranged near the perimeter edge (33) and configured so that, in use, the inner surface (21) of said tubular body (2) is connected to the surface of said inner face (31) of said bottom plate (3, 3') through said reduced thickness portion (4, 4').

2. Vessel (1) according to claim 1, wherein said reduced thickness portion (4) comprises a groove (41) extending circumferentially on the inner face (31) of said bottom plate (3).

3. Vessel (1) according to claim 2, wherein said groove (41) has a section comprising at least one portion having a curved development.

4. Vessel (1) according to claim 2 or 3, wherein said groove (41) is obtained at a distance from the perimeter edge (33) essentially equal to the value of the thickness (DM) of the tubular body (2).

5. Vessel (1') according to claim 1, wherein said bottom plate (3') has a thickness (DF) greater than the thickness (DM) of said tubular body (2), said reduced thickness portion (4') being formed by a circular crown comprising a profile (41') sloping towards the perimeter edge (33), said reduced thickness portion (4') being plastically deformable so that the perimeter edge (33) is arranged essentially orthogonally with respect to the lying plane of the inner face (31) of said bottom plate (3') to obtain at least one inner surface (41B') of the reduced thickness portion (4') having a curved development.

6. Vessel (1') according to claim 5, wherein the profile (41') of said reduced thickness portion (4') slopes towards the perimeter edge (33) until it reaches a thickness essentially equal to the thickness (DM) of the tubular body (2).

7. Vessel (1') according to claim 5 or 6, wherein the profile (41') of said reduced thickness portion (4') is obtained on the outer face (32) of said bottom plate (3').

8. Method for producing a vessel (1, 1'), adapted to operate under pressure, comprising the following steps:
e) providing a tubular body (2) formed by a wall having a thickness (DM) and defining an inner surface (21);
f) providing a pair of bottom plates (3, 3') each formed by an essentially flat plate having a thickness (DF) and having an inner face (31), an outer face (32) and a perimeter edge (33);
g) positioning said bottom plates (3, 3') at the ends of said tubular body (2);
h) welding said bottom plates (3, 3') to the end edges of said tubular body (2) along a welding path (G) extending along the contact profile between said components, so that said vessel (1, 1') defines an essentially fluid-tight internal chamber (10),
**characterised in that**
it comprises, before step c), a step b') which provides for forming on at least one of said bottom plates (3, 3') a reduced thickness portion (4, 4') arranged near the perimeter edge (33) of said bottom plate (3, 3') and configured so that, in use, the inner surface (21) of said tubular body (2) is connected to the surface of said inner face (31) of said bottom plate (3, 3') through said reduced thickness portion (4, 4').

9. Method for producing a vessel (1) according to claim 8, wherein said step d) is carried out from outside the vessel towards the internal so that the outlet point (S) of said welding path (G) is located at said reduced thickness portion (4, 4').

10. Method for producing a vessel (1) according to claim 8 or 9, wherein said reduced thickness portion (4) of said bottom plate (3) comprises a circumferential groove (41) obtained by turning on the inner face (31) of said bottom plate (3).

11. Method for producing a vessel (1') according to claim 8 or 9, wherein said reduced thickness portion (4') of said bottom plate (3') is formed by a circular crown comprising a profile (41') sloping towards said perimeter edge (33), the method further comprising a step b") which provides for plastically deforming said reduced thickness portion (4') so that the perimeter edge (33) of said bottom plate (3') is arranged essentially orthogonally with respect to the lying plane of the inner face (31) of said bottom (3').
